# EUROPEAN PATENT SPECIFICATION

(11) **EP 0 237 012 B1**
(45) Date of publication and mention of the grant of the patent: **02.06.1993**
(21) Application number: 87103371.8
(22) Date of filing: 10.03.1987
(51) Int. Cl.: H02M 7/757, H02M 7/162

(54) **A control apparatus for PWM power converters**
Steuerapparat für pulsbreitenmodulierte Umrichter
Appareil de commande pour convertisseurs de puissance à modulation de largeur d'impulsion

(30) Priority: 11.03.1986 JP 53394/86; 17.03.1986 JP 56830/86; 28.03.1986 JP 68359/86
(43) Date of publication of application: 16.09.1987
(73) Proprietor: HITACHI, LTD., Chiyoda-ku, Tokyo 101 (JP)
(72) Inventor: Miyake, Wataru, Katsuta-shi§Ibaraki 312 (JP); Nakamura, Kiyoshi, Katsuta-shi Ibaraki 312 (JP); Nakata, Kiyoshi Yuni-haitsu 202, Nishi-ibaraki-gun Ibaraki 309-17 (JP); Ishida, Toshihiko, Hitachi-shi§Ibaraki 317 (JP)
(74) Representative: Beetz & Partner Patentanwälte

(56) References cited:
- US-A- 3 909 698
- PATENT ABSTRACTS OF JAPAN vol. 7, no. 200 (E-196) 1345 3 September 1983, & JP-A-58 99270
- SHOWA 60 (1985) Tokyo section Convention of the institute of Electric Engineers

## Description

### Field of the Invention

The present invention relates to a control apparatus for a PWM-controlled power converter which has an inductive element on the AC input side thereof and a capacitive element on the DC output side thereof, more particularly to an improved control apparatus by which a sufficient output power can be obtained with a PWM-controlled power converter having a relatively small current capacity.

### Description of the Related Art

Recently it is proposed that a power converter, which has a reactor on the AC input side and a capacitor on the DC output side, is controlled by a PWM control method and a high power factor and a reduced distortion in an AC input current can be attained. Such a PWM-controlled power converter (called a PWM converter, hereinafter) can be operated at the power factor of 1.0 by appropriately adjusting the magnitude of an AC input voltage of the converter and the phase thereof with respect to a source voltage. In addition, if the switching frequency of switching elements of the converter can be made sufficiently high, it is possible to render an AC input current supplied for the converter from a power source substantially sinusoidal.

In a sinusoidal PWM control known as one of the control methods of the PWM converter, a triangular carrier wave is modulated by a sinusoidal control voltage which has the frequency equal to the operation frequency of the converter. On the basis of the modulation result, gate signals are produced to control the on-off operation of switching elements of a converter. A ratio of the amplitude of the sinusoidal control voltage to the peak value of the triangular carrier wave is usually called a modulation factor. A ratio of on and off times of the switching elements, i.e., a duty ratio, can be controlled by varying this modulation factor so that a DC output voltage of the converter is adjusted. Further, in order to prevent the switching elements from being destroyed by high voltage abnormally produced during the operation, the minimum on and off times are limited to a certain value, and therefore the modification factor also has a limit value.

In US-A-3 909 698 is disclosed an output-regulated AC to DC converter which has a rectifying stage including a plurality of thyristors each shunted by a diode of opposite polarity. The excitation of a coil disposed between an input transformer of the converter and the rectifying stage is controlled by selectively varying the thyristor conduction patterns so that the output DC voltage may be added or subtracted from the transformer output voltage, depending on the sense of deviation of the actual coil current from a reference coil current. Such reference current, in turn, is derived as a sinusoidal quantity whose phase is coincident with that of the AC input voltage to the converter and whose amplitude is proportional to the difference between the DC output voltage of the converter and a desired value.

In a conventional control apparatus for a PWM converter, the aforesaid sinusoidal control voltage is generated by using an analog apparatus on the basis of a reference value of a DC output voltage of the converter, an actual value thereof, a source voltage which is applied to the converter from a power source through a reactor, and an AC input current of the converter. In case the same method as in the conventional apparatus is attempted to be realized by the digital technique, instantaneous values of the aforesaid sinusoidal control voltage must be calculated by a microcomputer, for example. However, this calculation requires a large amount of processing steps and must be conducted at a very high speed. Therefore, the conventional method of generating the sinusoidal control voltage is not suitable for a digital apparatus.

A method for suitably realizing a control apparatus by the digital technique is disclosed in pages 85 to 88 of The Transactions of The 1985 Tokyo Section Convention of The Institute of Electric Engineers of Japan. According thereto, a control apparatus has an automatic voltage regulation (AVR) system and an automatic phase regulation (APR) system.

In the AVR system, at first, a deviation between a reference value of a DC output voltage of a PWM converter and an actual value thereof is detected. A reference value of an AC input current (called an AC current, hereinafter) of the converter is obtained on the basis of the above mentioned DC voltage deviation and an actual DC load current. Further, an imaginary part of an AC input voltage (called a converter input voltage, hereinafter) of the converter is calculated by multiplying the reference value of the AC current by an impedance ωL of a reactor inserted on the AC input side of the converter, wherein ω indicates an angular frequency of a source voltage and L a reactance of the reactor.

Incidentally, the imaginary part of the converter input voltage means the component of a vector of the converter input voltage, which is at right angles to a vector of the source voltage. This is called an imaginary component of the converter input voltage, hereinafter, whereas the component of the vector of the converter input voltage, which is in parallel with or in the same phase as the vector of the source voltage, is called a real component. The same is true of other variables of vector quantities. Namely, a real component of a certain variable means the component of a vector of the variable which is in parallel with the vector of the source voltage, and an imaginary component thereof means the component which is at right angles to the vector of the source voltage.

Further, in the APR system, the real component of the converter input voltage is obtained on the basis of the phase difference between the source voltage and the AC current. On the basis of both the real and imaginary components of the converter input voltage thus obtained, two values in the polar coordinate system, i.e., the absolute value of the converter input voltage and the phase thereof to be maintained with respect to the source voltage, are obtained by a coordinate transformation. A triangular carrier wave is modulated by using these absolute value and phase. Gate signals of switching elements of the converter are generated in accordance with this modulation result.

The above mentioned absolute value of the converter input voltage determines the on and off times of the switching elements of the converter. In this sense, the absolute value of the converter input voltage corresponds to the modulation factor already described. Therefore, the absolute value of the converter input voltage will be called the modulation factor also in the following explanation.

In the control method of this prior art, the instantaneous values of the sinusoidal wave are not calculated, and instead the two values in the polar coordinate system are sufficient to be obtained every half cycle of the source voltage. Accordingly, this method does not require any high speed processing operation in the control apparatus, and therefore is suitable for realizing a control apparatus of a PWM converter by means of the digital technique.

However, the control apparatus of this prior art is still accompanied by some problems as follows. Firstly, when a large amount of power is required by a load, there is the possibility that the converter can not supply the necessary power for the load. This results from the fact that the converter input voltage is restricted by limiting the modulation factor to a certain value for the protection of the switching elements of the converter.

Secondly, if the imaginary component of the converter input voltage increases too much with the DC voltage deviation, there occurs the case where the peak value of the AC current including ripple may exceed the allowable current of the switching elements. Therefore, the switching elements are to be used, which have the sufficient margin in their current capacity, so that the utilization factor of the current capacity of the switching elements are made very low.

These problems render the size of the converter large unnecessarily. The prior art quoted above neither provide the solution of these problems nor even suggest the problems themselves.

### SUMMARY OF THE INVENTION

An object of the present invention is to provide a control apparatus for a PWM converter, in which a power factor is allowed to deteriorate under a certain operational condition of the converter, whereby a large electric power can be treated by the power converter of a relatively small current capacity.

This object is achieved according to the invention by the features recited in claim 1.

A control apparatus according to the present invention is applied to a PWM converter, which is coupled with an AC power source through a reactive element and has a capacitive element connected to the DC side thereof, and composed of semiconductor switching elements which are controlled by gate signals generated in accordance with a PWM control.

According to a feature of the present invention, in a control apparatus for use in such a PWM converter, an imaginary component of a converter input voltage applied to the converter is calculated on the basis of a deviation between a DC voltage and a reference value thereof, and a real component of the converter input voltage is calculated on the basis of a deviation between a phase difference of an AC current with respect to a source voltage and a reference value of the phase difference. An absolute value of the converter input voltage and a phase thereof to be maintained with respect to the source voltage are calculated in accordance with the imaginary and real components of the converter input voltage as above obtained. A carrier wave is modulated by using the thus obtained absolute value and phase, in which a modulation factor at present is determined by the calculated absolute value, and the gate pulses of the switching elements are generated on the basis of the present modulation factor. A value related to the present modulation factor is detected and compared with a limit value provided in advance for a modulation factor related value, and when the present modulation factor related value exceeds the limit value of the modulation factor related value, the calculated real component of the converter input voltage is decreased in response to a deviation therebetween.

According to the present invention, if a large output power is required by a load, the necessary power can be supplied without making the modulation factor exceed its maximum value by allowing the power factor to deteriorate.

Further, according to another feature of the present invention, if the DC voltage deviation becomes too large, the increase of the imaginary component of the converter input voltage is restricted. Therefore, a peak value of the AC current including ripple is prevented from exceeding an allowable current of the switching elements, so that the margin of the current capacity of the switching elements can be reduced and the utilization factor of the current capacity thereof is much improved. This results in making the size of the converter smaller without reducing the output ability thereof.

Furthermore, the AC current may be incapable of being restricted under the deteriorated power factor, even if the imaginary component of the converter input voltage is limited. According to still another feature of the present invention, the AC current is subject to the feedback control, so that the AC current is restricted within the allowable current of the switching elements even though the excess load is required and the DC voltage decreases.

Other objects, features and advantages of the present invention will become apparent upon reading the specification and inspection of the drawings and will be particularly pointed out in the claims.

### BRIEF DESCRIPTION OF THE DRAWINGS

Fig. 1a is a schematic diagram showing a main circuit of an electric vehicle as an example, in which power converters controlled by a control apparatus according to the present invention are included;
Fig. 1b is a schematic diagram showing a circuit arrangement of a power converter employed in the main circuit shown in Fig. 1a;
Fig. 2 is a vector diagram indicating the relation between a source voltage Ė_{S}, a converter input voltage Ė_{C}, a reactor voltage Ė_{L} and an AC current İ_{S}, when the converter operates at the power factor of 1.0;
Fig. 3 shows a waveform of the PWM-controlled AC current Iₛ;
Fig. 4 is a block diagram showing a control apparatus for a PWM converter according to an embodiment of the present invention;
Fig. 5 is a vector diagram for explaining an operation of the control apparatus of, Fig. 4, when the converter, which is already operated at a maximum modulation factor, is required to further produce a larger output power;
Fig. 6 is a vector diagram for explaining an operation of the control apparatus of Fig. 4, when the source voltage increases;
Fig. 7 is a block diagram of a control apparatus according to another embodiment, in which, however, only a portion related to this embodiment is shown;
Fig. 8 is a block diagram of a control apparatus according to still another embodiment, in which, also, only a portion directly related to this embodiment is shown;
Fig. 9 is a diagram showing an example of a characteristic of a limit value controller utilized in the embodiment of Fig. 8;
Fig. 10 is a diagram for explaining the relation between the converter input voltage Ė_{C} and the DC voltage E_{d};
Figs. 11a and 11b are vector diagrams for explaining the function and operation of a minor ACR system provided in the control apparatus of Fig. 4; and
Fig. 12 is a block diagram of a control apparatus according to further embodiment, in which, also, only a portion directly related to this embodiment is shown.

### DESCRIPTION OF THE PREFERRED EMBODIMENTS

In the following, the description will be made of the preferred embodiments of the present invention, referring to the drawings.

Fig. 1a schematically shows a main circuit of an electric vehicle which includes converters controlled by a control apparatus according to an embodiment of the present invention. In the figure, an AC voltage fed from a contact wire 1 is supplied to a primary winding 3 of a main transformer 5 through a pantagraph 7. The transformer 5 has plural secondary windings 9, 11, which are coupled with converters 13, 15 through reactors 17, 19, respectively. Functionally, the reactors 17, 19 can be substituted by leakage inductance of the secondary windings 9. 11 of the transformer 5.

Both the converters 13, 15 are controlled by the PWM control method to produce respective DC output voltages. Therefore, these converters are called PWM converters in the following. A capacitor 21 is connected in common to the output sides of both the converter 13, 15. The DC output voltage of the PWM converters 13, 15 appears across terminals of the capacitor 21. An inverter 23 inverts the DC voltage of the capacitor 21 into a variable AC voltage of variable frequencies, which is fed to an induction motor 25.

In the main circuit shown, there are two sets of the converters 13, 15. This is for the purpose of reducing harmonic components included in an AC input current by operating these two converters 13, 15 with the slight difference in the operational phase. The number of sets of the converters provided in parallel is determined in accordance with the desired degree of the reduction of the harmonic components and the current capacity of switching elements of the converters. Since, however, the number of the converters has no particular relation to the essence of the present invention, the further description thereof is omitted.

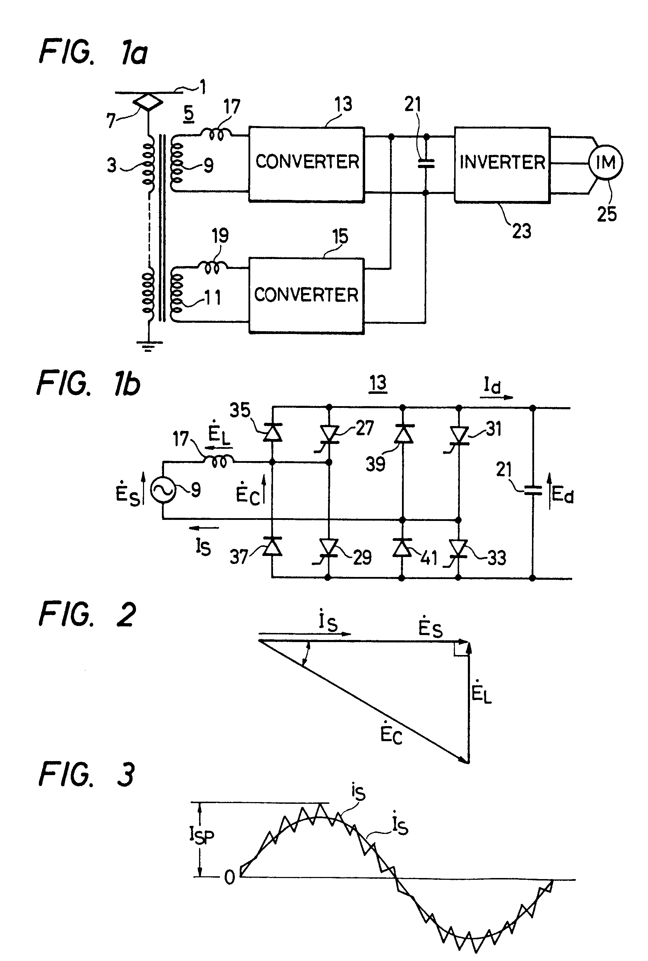

Fig. 1b illustrates an example of a circuit arrangement of a converter which can be used as the PWM converters 13, 15 shown in Fig. 1a. In the figure, only the converter 13 is shown, and the same reference numerals indicate the identical parts to those in Fig. 1a.

The converter 13 is formed by semiconductor switching elements 27, 29, 31, 33, such as gate turn-off thyristors (called GTO, hereinafter), connected in a bridge circuit. One of terminals of the AC source 9 is coupled to the connecting point of GTOs 27, 29 through the reactor 17 and the other terminal to that of GTOs 31, 33. Diodes 35, 37, 39, 41 are connected in reverse parallel to the respective GTOs.

For the convenience of the following explanation, control variables of various parts in the converter 13 and the direction thereof are indicated by reference symbols and arrows attended thereto as shown in the figure. Further, a reference symbol attached with a dot thereover means that a control variable represented by the reference symbol is a vector quantity.

Now, when the converter 13 as shown in Fig. 1b is operated in accordance with the PWM control method, the relation of vectors of a source voltage Ė_{S}, a converter input voltage Ė_{c} and a reactor voltage Ė_{L} becomes as follows:

${{\text{E}}^{̇}}_{\text{S}} \text{=} {{\text{E}}^{̇}}_{\text{C}} \text{+} {{\text{E}}^{̇}}_{\text{L}} \text{(1)}$

When the converter 13 is operated at the power factor of 1.0, the relation of the vectors represented by the above formula becomes as shown in Fig. 2. Usually, as shown in the figure, the converter input voltage Ė_{C} is so controlled that the reactor voltage Ė_{L} falls at right angles with the source voltage Ė_{S}. Accordingly, since an AC current İ_{S} is at right angles with the reactor voltage Ė_{L}, it becomes in the same phase as the source voltage Ė_{S}, as shown in the figure.

Further, when an angular frequency of the source voltage is ω and an inductance of the reactor 17 is L, the AC current İ_{S} is represented by the following formula: 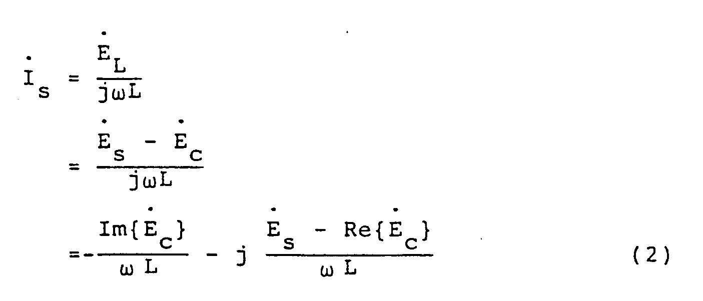
In the above formula, an additional symbol Re{} is used in order to represent a real component of a certain vector quantity, whereas an additional symbol Im {} is used for representing an imaginary component thereof. Therefore, Re{Ė_{C}} represents a real component of the vector of the converter input voltage Ė_{C} and Im{Ė_{C}} an imaginary component thereof.

It will be understood from the formula (2) that, if the angular frequency ω of the source voltage Ė_{S} and the inductance L of the reactor 17 are maintained constant, the real component Re{İ_{S}} of the AC current, which serves as an effective power, can be adjusted by varying an imaginary component Im{Ė_{C}} of the converter input voltage, and the imaginary component Im{İ_{S}} of the AC current, which serves as a reactive power, can be adjusted by controlling a real component Re{Ė_{C}} of the converter input voltage.

Namely, it is possible to independently adjust the power factor by the real component Re{Ė_{C}} of the converter input voltage, while the real component Re{İ_{S}} of the AC current, i.e., the output power of the converter 13, is controlled by the imaginary component Im{Ė_{C}} thereof.

Further, in the PWM converter mentioned above, if the switching frequency of the converter can be selected at the very high frequency, the AC current İ_{S} is made a more perfect sinusoidal wave. Actually, however, the switching frequency of the PWM converter has the upper limit, which depends on the minimum on or off time and switching loss of GTO of the converter. As a result, the AC current İ_{S} does not become a perfect sinusoidal wave, but has a waveform including ripple, as shown by i_{S} in Fig. 3. In such a case, a peak value I_{SP} of the AC current is not permitted to exceed an allowable current of GTO. Therefore, the PWM converter must be operated in the range in which the peak value I_{SP} never exceeds the allowable current of GTO.

Incidentally, as shown in Fig. 1a, if there are provided two sets of the converters 13, 15, which are operated with a phase difference of a half period of the switching operation of the converters from each other, the amplitude of the ripple is remarkably reduced, because two rippled waves as shown in Fig. 3 are superposed with the phase difference. Accordingly, the AC current becomes further close to a perfect sinusoidal wave.

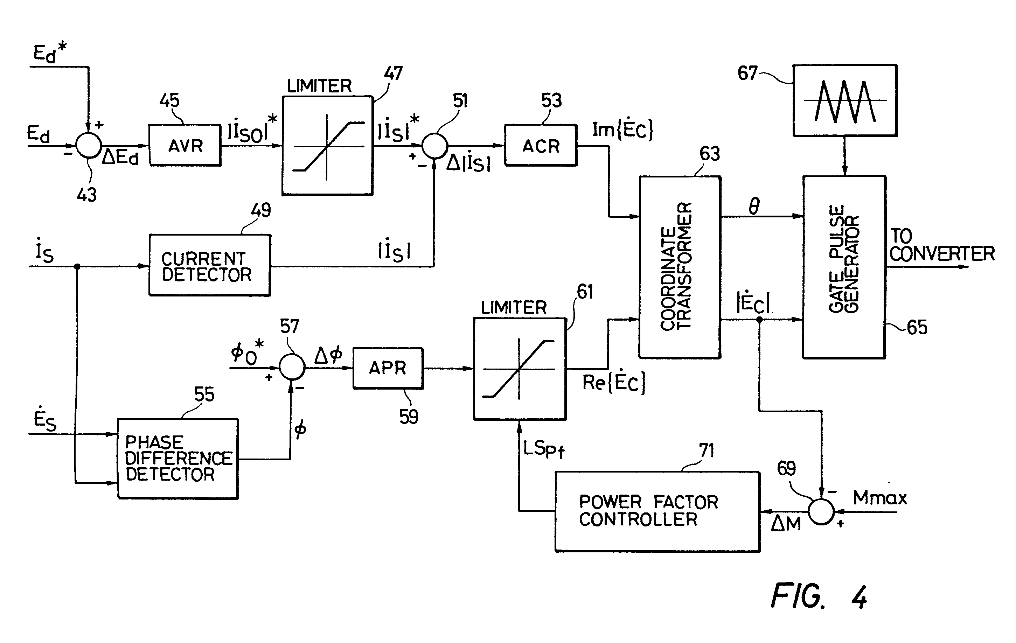

Now, referring to Fig. 4, the explanation will be done of the construction of a control apparatus according to an embodiment of the present invention, which is utilized for the control of the PWM converter as shown in Fig. 1b.

In the figure, a DC voltage E_{d}, which is actually detected from the terminals of the capacitor 21, is compared with its reference E_{d}* in a comparator 43 so that a deviation ΔE_{d} is obtained. An automatic voltage regulator (AVR) 45 receives the deviation ΔE_{d} and outputs a reference |İ_{S0}|* of an amplitude of the AC current. This reference |İ_{S0}|* passes through a limiter 47 to become |İ_{S}|*, which is also the reference of the amplitude of the AC current.

Namely, during |İ_{S0}|* does not exceed a predetermined limit value, |İ_{S}|* is in proportion to |İ_{S0}|*. When |İ_{S0}|* becomes larger than the limit value, however, |İ_{S}|* is limited to the limit value of |İ_{S0}|*, and maintained at the value during |İ_{S0}|* exceeds the limit value.

With respect to the further detailed function and operation of the limiter 47, the description will be made later together with the explanation of the operation of this embodiment.

A current detector 49 detects an amplitude |İ_{S}| of the AC current. Although the current detector 49 in this embodiment is an amplitude detector, it is of course that a detector of other types, such as an effective value detector, a mean value detector and so on, can be used in accordance with the kinds of the output of AVR 45. This has to be determined so as to meet need of the control.

The reference |İ_{S}|* and the actual value |İ_{S}| are compared by a comparator 51, in which a deviation Δ|İ_{S}| is produced. An automatic current regulator (ACR) 53 receives the deviation Δ|İ_{S}| and produces an output signal Im{Ė_{C}}. As already described, Im{Ė_{C}} means the imaginary component of the converter input voltage Ė_{C} .

In this way, a control system including AVR 45 and ACR 53, i.e., an AVR system, is a control system which calculates the imaginary component Im{Ė_{C}} of the converter input voltage from the DC voltage deviation ΔE_{d}.

On the other hand, a phase difference detector 55 detects a phase difference φ between the source voltage Ė_{S} and the AC current İ_{S}. The phase difference φ is compared with its reference φ₀* in a comparator 57. Usually, the reference φ₀* is set at 0° in an electric angle so that the power factor $\text{(cos φ)}$ is kept at 1.0. The comparator 57 produces a deviation Δφ. An automatic phase regulator (APR) 59 receives the deviation Δφ and outputs a signal Re{Ė_{C}}. As already described, Re{Ė_{C}} means the real component of the converter input voltage.

The output Re{Ė_{C}} of APR 59 is led to a limiter 61, in which Re{Ė_{C}} is limited when it exceeds a predetermined limit value. The operation of this limiter 61 is the same as that of the limiter 47 with respect to the output |İ_{S0}|* of AVR 45. Further details of the limiter 61 will be described together with the explanation of the operation of this embodiment.

As described above, a control system including APR 59, i.e., an APR system, is a control system, in which the real component Re{Ė_{C}} of the converter input voltage is calculated on the basis of the phase difference φbetween the source voltage Ė_{S} and the AC current İ_{S}.

The imaginary component Im{Ė_{C}} and the real component Re{Ė_{C}} thus obtained are both input to a coordinate transformer 63, in which they are transformed into two values in the polar coordinate, i.e., an absolute value |Ė_{C}| of the vector of the converter input voltage and the phase ϑ of the converter input voltage Ė_{C} to be maintained with respect to the source voltage Ė_{S}, in accordance with the following formulas: 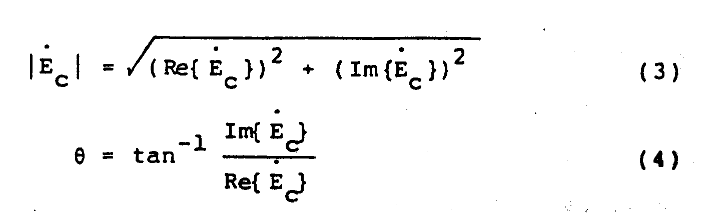
The thus obtained |Ė_{C}| and ϑ are supplied to a gate pulse generator 65, which modulates a triangular carrier wave supplied from a carrier wave generator 67 in accordance with |Ė_{C}| and ϑ and generates gate signals for GTOs of the converter 13 on the basis of the modulation result.

For example, first of all, a sine wave which has the phase difference of ϑ from the source voltage Ė_{S} is generated. The angular frequency of the sine wave is the same as that of the source voltage Ė_{S}. Next, the generated sine wave is multiplied by |Ė_{C}|, so that the amplitude of the sine wave is proportional to |Ė_{C}|. The triangular carrier wave is modulated by the thus generated sine wave. After the sine wave for modulating the carrier wave has been generated, the process of modulating the carrier wave and generating the gate signals for the converter is the same as that in the conventional method.

As apparent from the above description, the absolute value |Ė_{C}| determines the amplitude of the modulating sine wave, which corresponds to the sinusoidal control voltage described in the Description of the Related Art. If, therefore, the peak value of the triangular carrier wave and the DC voltage E_{d} are maintained constant, the modulation factor is in proportion to the magnitude of |Ė_{C}|. In other words, |Ė_{C}| can be regarded as being equivalent to the modulation factor.

The output |Ė_{C}| is led to a comparator 69, too, in which it is compared with a maximum modulation factor Mₘₐₓ, so that a deviation ΔM therebetween is obtained. The deviation ΔM is given to a power factor controller 71, which produces a power factor limit signal LS_{pf} in accordance with the deviation ΔM. The signal LS_{pf} is led to the limiter 61 and changes the limit value of Re{Ė_{C}} provided therein.

Further, with respect to the gate pulse generator 65, attention must be paid to the maximum modulation factor Mₘₐₓ. Namely, if |Ė_{C}| obtained in the coordinate transformer 63 is larger than Mₘₐₓ, the gate pulse generator 65 modulates the carrier wave in view of Mₘₐₓ to generate the gate pulses. Therefore, the converter is not operated at the modulation factor exceeding Mₘₐₓ.

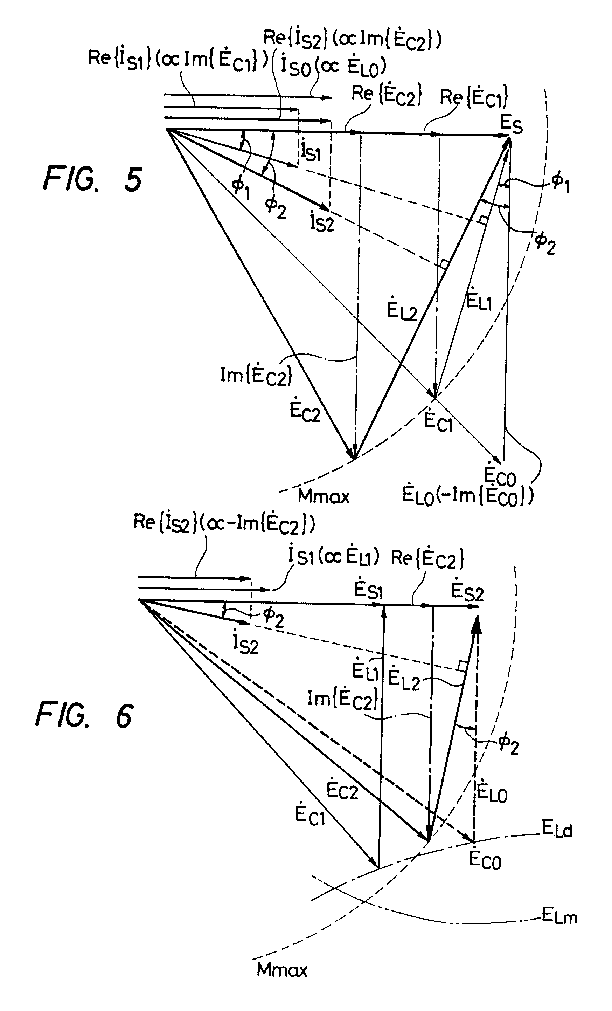

Referring next to Fig. 5, in which there is shown the relation of the vectors of the source voltage Ė_{S}, the converter input voltage Ė_{C}, the reactor voltage Ė_{L} and the AC current İ_{S}, the operation of the embodiment described above wills be explained hereinafter.

The explanation will at first be made of the function and operation of the APR system; especially, of those of the limiter 61 and the power factor controller 71. In the case where a load does not change and therefore there occur no variations in both the DC voltage E_{d} and the phase difference φ between the source voltage Ė_{S} and the AC current İ_{S}, the imaginary component Im{Ė_{C}} of the converter input voltage and the real component Re{Ė_{C}} thereof calculated by the AVR system and APR system, respectively, are maintained as they are. Accordingly, on the basis of Im{Ė_{C}} and Re{Ė_{C}}, the coordinate transformer 63 calculates the modulation factor the absolute value of the converter input voltage |Ė_{C}| and the phase ϑ of the converter input voltage Ė_{C} with respect to the source voltage Ė_{S}, and the PWM converter continues to operate in accordance with the obtained |Ė_{C}| and ϑ.

Assuming here that the load further increases so that the DC voltage E_{d} falls, the AVR system intends to increase the real component Re{İ_{S}} of the AC current by increasing the imaginary component Im{Ė_{C}} of the converter input voltage, because the deviation ΔE_{d} increases due to the decrease of the DC voltage E_{d}.

Then, if the output Re{Ė_{C}} of the APR system does not change, the absolute value |Ė_{C}| of the converter input voltage, which is calculated by the coordinate transformer 63 on the basis of the increased Im{Ė_{C}} and the unchanged Re{Ė_{C}}, becomes larger than the previous value thereof and may exceed the maximum modulation factor Mₘₐₓ. The vector of the converter input voltage, which has such an increased absolute value, becomes as shown by Ė_{C0} in Fig. 5. The AC current necessary at this time becomes İ_{S0} as shown in the figure. As apparent from the figure, İ_{S0} is in proportion to Ė_{L0}. Further, Ė_{L0} is of the equal magnitude to, and in the opposite direction to Im{Ė_{C}}.

In the actual operation of the converter, however, the modulation factor M (|Ė_{C0}| in this case) is not permitted to exceed Mₘₐₓ. Therefore, although the coordinate transformer 63 produces |Ė_{C0}| exceeding Mₘₐₓ, the vector of the converter input voltage when the converter is actually operated becomes as shown by Ė_{C1}, so that the reactor voltage is made as Ė_{L1}, and the AC current as shown by İ_{S1} flows through the AC side of the converter, because the AC current İ_{S1} is at right angles to the reactor voltage Ė_{L1}.

As apparent from the vector diagram of Fig. 5, since the AC current İ_{S1} has the phase difference φ₁ with respect to the source voltage Ė_{S}, only its real component Re{İ_{S1}} is effective for the power supplied to the load. Also, as apparent from the figure, Re{İ_{S1}} is smaller than İ_{S0}. This means that the power supplied to the load is reduced and the shortage of the necessary power is caused.

According to the embodiment, |Ė_{C}| from the coordinate transformer 63 is compared with Mₘₐₓ in the comparator 69, and the power factor controller 71 produces the power factor limit signal LS_{pf} on the basis of the comparison result. The signal LS_{pf} reduces the limit level Of the limiter 61. Namely, in the vector diagram of Fig. 5, the real component Re{Ė_{C1}} is further reduced to Re{Ė_{C2}} so that the vector Ė_{C2} of the converter input voltage is brought within the maximum modulation factor Mₘₐₓ. At this time, the imaginary component Im{Ė_{C2}} does not change and is equal to $\text{Im{} {{\text{E}}^{̇}}_{\text{C0}} \text{} (=} {{\text{E}}^{̇}}_{\text{L0}} \text{)}$ , because it is determined by the AVR system on the basis of the DC voltage deviation ΔE_{d}.

As a result, the reactor voltage and the AC current become as shown by Ė_{L2} and İ_{S2}, respectively. The AC current İ_{S2} has the phase difference of φ₂ with respect to the source voltage Ė_{S}, which is larger than φ₁ in the AC current İ_{S1}. Accordingly, the power factor (cos φ) is of course deteriorated. However, the real component Re{İ_{S2}} of the AC current is equal to İ_{S0} so that the required power can be supplied for the load.

In this way, according to the embodiment, when the large power is required so that the modulation factor exceeds Mₘₐₓ, the power factor is allowed to deteriorate, whereby the necessary power can be supplied for the load.

By the way, the deterioration of the power factor, in a general sense, is not desirable for the operation of a converter. However, in such a case where a converter is applied to an electric vehicle, time during which the maximum output power is required is not so long. In an electric vehicle with the maximum speed of 300 km/h, for example, the maximum power is required in the speed range of 100 to 200 km/h, which corresponds to a so-called constant power control range. If the acceleration of the vehicle is 2.0 km/h/sec., the time, during which the maximum power is necessary, is at longest one minute. No particular problem occurs, even if the power factor is deteriorated for such a short time.

Further, the power factor controller 71 is also available for the fluctuation of the source voltage Ė_{S}; especialy for the problem caused by the increase of the source voltage Ė_{S} when the converter is burdened heavily. Referring to a vector diagram of Fig. 6, the explanation will be made of the control operation for the fluctuation of the source voltage Ė_{S}.

Let us assume that the converter operates in the constant power control range as described above and that, at that time, the relation of the source voltage, the reactor voltage and the converter input voltage is as shown by Ė_{S1}, Ė_{L1} and Ė_{C1} in Fig. 6. Then the necessary AC current is in proportion to Ė_{L1} and becomes as shown by İ_{S1}. As apparent from the figure, the converter input voltage Ė_{C1} remains within Mₘₐₓ. In such a condition, assuming that the source voltage has changed to Ė_{S2} (>Ė_{S1}) from Ė_{S1}, the reactor voltage Ė_{L0} is required, if the converter tries to keep the constant output power, while maintaining the power factor at 1.0 irrespective of the increase of the source voltage Ė_{S}. As a result, the converter input voltage becomes as Ė_{C0}, and |Ė_{C0}| exceeds Mₘₐₓ as shown in the figure.

An one-dot-chain line E_{Ld} will be explained here. This line indicates a locus of one end of the vector of the reactor voltages Ė_{L} for always keeping the output power constant while maintaining the power factor at 1.0 irrespective of the increase of the source voltage Ė_{S}. For example, the output power P is represented by E_{Se}·I_{Se}, wherein E_{Se} and I_{Se} represent effective values of Ė_{S} and İ_{S}, respectively, i.e., ${\text{E}}_{\text{Se}} \text{=} {{\text{E}}^{̇}}_{\text{S}} \text{/√2}$ and ${\text{I}}_{\text{Se}} \text{=} {{\text{I}}^{̇}}_{\text{S}} \text{/√2}$ 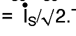 . Therefore, the AC current İ_{Sj} is generally represented as follows:

${{\text{I}}^{̇}}_{\text{sj}} \text{= 2P/} {{\text{E}}^{̇}}_{\text{sj}} \text{(j = 1, 2, 3, ..... ) (5)}$

Further, since there is a relation of ${{\text{E}}^{̇}}_{\text{L}} \text{= jωL·} {{\text{I}}^{̇}}_{\text{S}}$ , the reactor voltage Ė_{Lj} is generally represented as follows: 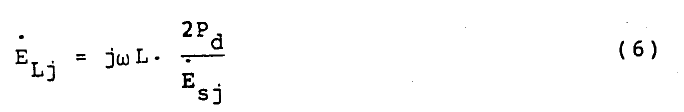
The line E_{Ld} is obtained by plotting the values of Ė_{Lj} with respect to Ė_{Sj} in a manner that the vectors of Ė_{Lj} are at right angles to the vectors of the corresponding Ė_{Sj}. Further, with respect to a two-dot-chain line E_{Lm} in Fig. 6, the explanation will be made later.

Incidentally, the following will be understood from the above description. If a converter is so controlled that, in the vector diagram of Fig. 6, the vector of the reactor voltage Ė_{Lj} moves parallel with the vector of Ė_{L1} between the vector of the source voltage Ė_{S} and the line E_{Ld} so that both ends of the reactor voltage vector are brought into contact with them, then the converter always produces the constant output power. Namely, for example, the output power produced under the condition of the source voltage Ė_{S1} and the reactor voltage Ė_{L1} is equal to that produced under the condition of the source voltage Ė_{S2} and the reactor voltage Ė_{L0}.

Now, as already described, the modulation factor (the absolute value |Ė_{C0}| of the converter input voltage) obtained by the coordinate transformer 63, which exceeds Mₘₐₓ, is compared with Mₘₐₓ in the comparator 69, and the deviation ΔM therebetween is obtained. The deviation ΔM is converted into the power factor limit signal LS_{pf} by the power factor controller 71. The limiter 61 changes the limit value prepared therein in response to the signal LS_{pf}. Consequently, the real component $\text{Re{} {{\text{E}}^{̇}}_{\text{C0}} \text{} (=} {{\text{E}}^{̇}}_{\text{S2}} \text{)}$ of the converter input voltage is reduced to Re{Ė_{C2}} so that the converter input voltage becomes Ė_{C2}, which remains within Mₘₐₓ. At this time, the reactor voltage becomes Ė_{L2} and therefore the AC current becomes İ_{S2}, which has the phase difference φ₂ with respect to the source voltage Ė_{S2}.

During the course of the above mentioned reduction of the real component Re{Ė_{C0}} of the converter input voltage, the AVR system does not change the imaginary component Im{Ė_{C0}} so that the imaginary component Im{Ė_{C2}} of the converter input voltage is kept equal to Ė_{L0}. Accordingly, the output power being produced when the reactor voltage is Ė_{L2} is equal to that to be produced when the reactor voltage is Ė_{L0}. Further, as already described, the latter is equal to the output power which has been produced in the case of the source voltage Ė_{S1} and the reactor voltage Ė_{L1}. Therefore, the output power being produced under the condition of the source voltage Ė_{S2} and the reactor voltage Ė_{L2} becomes equal to the output power which has been produced when the source voltage is E_{S1} and the reactor voltage Ė_{L1}. Namely, even if the source voltage Ė_{S} is increased, the constant output power can continue to be supplied for a load by allowing the power factor to deteriorate.

As described above, an electric vehicle requires the maximum output power during the constant power control range. In other ranges, such as a constant torque control range and a characteristic acceleration range, a required output power is smaller than that in the constant power control range. In such ranges, the converter input voltage also becomes smaller than that in the constant power control range. Accordingly, as described above, the power factor is only necessary to be deteriorated in the cases where the large output power is required by the load and where the Source voltage Ė_{S} is increased.

Next, the effect of this embodiment will be considered. For the comparison, the description will be made of a conventional example, too.

Conventionally, the source voltage Ė_{S} (e.g., an output voltage of the secondary windings 9, 11 of the main transformer 5) was determined as follows; namely, a maximum value of Ė_{S} is so determined that the modulation factor never exceeds Mₘₐₓ, even if the power factor is 1.0 and the converter produces the maximum output power, and a minimum value of Ė_{S} is so determined that, under the same condition as described above, the AC current İ_{S} never exceeds the allowable current of the converter. A rated value of Ė_{S} is selected in view of the fluctuation range as mentioned above.

On the contrary, in the present embodiment, the power factor is allowed to become low, when Ė_{S} increases. Therefore, the maximum value of Ė_{S} can be arbitrarily determined with the modulation factor maintained at Mₘₐₓ. Hence, the rated value of Ė_{S} can be selected high, compared with the conventional one. As a result, the value of İ_{S} under the rated Ė_{S} becomes smaller than the conventional one, and therefore İ_{S} becomes not so large, even if Ė_{S} decreases. This means that the current capacity of the converter can be reduced.

Further, the output power P is represented as $\text{P = 1/2·} {{\text{E}}^{̇}}_{\text{S}} \text{·} {{\text{I}}^{̇}}_{\text{S}} \text{cos φ}$ . Therefore, if the power factor is deteriorated ( $\text{cos φ < 1.0}$ ), İ_{S} must be increased in order to obtain the same output power P, whereas if Ė_{S} increases, the same output power P can be obtained with the smaller İ_{S}. Accordingly, in the present embodiment, although the power factor is deteriorated when Ė_{S} increases, the decrement of İ_{S} caused by the increase of Ė_{S} is superior to the increment thereof caused by the deterioration of the power factor. This also means that the current capacity of the converter can be reduced.

According to an example of the inventor's estimation, the current capacity of the converter can be reduced by about 15 %, if the power factor is allowed to deteriorate down to around 0.9 under the worst possible conditions.

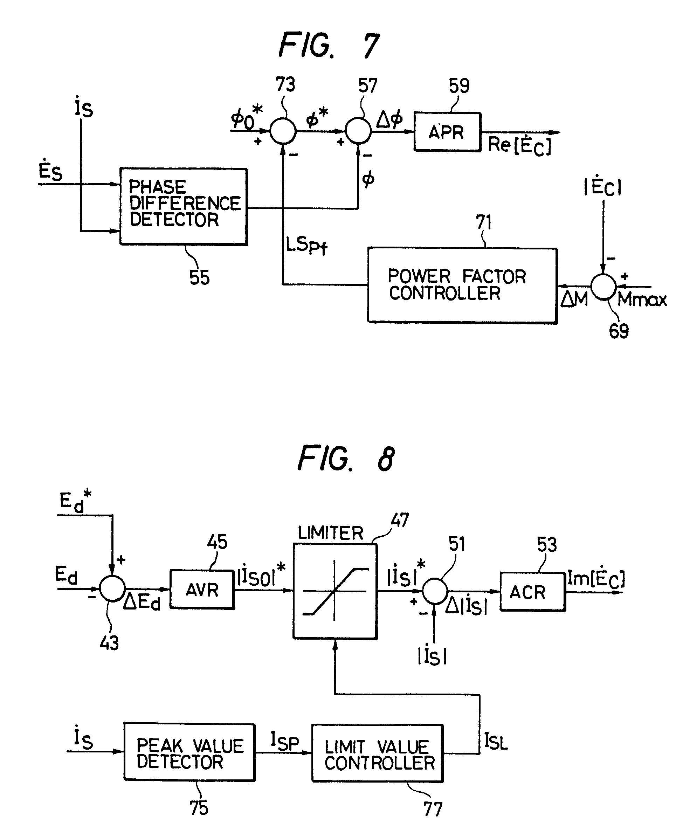

In the embodiment mentioned above, the output of APR 59 has been limited in response to the signal LS_{pf}. However, the same effect can be also attained by modifying the reference φ₀* of the phase difference between the source voltage Ė_{S} and the AC current İ_{S} in accordance with the signal LS_{pf}. Another embodiment according to this is illustrated in Fig. 7, in which, however, only the portion related to this embodiment is shown. Further, in the figure, the same reference numerals and symbols represent the identical parts and signals to those in Fig. 4.

In this embodiment, there is provided a comparator 73, which modifies the reference φ₀* in response to the signal LS_{pf} to produce a new reference φ*. The comparator 57 compares the actual phase difference φ detected by the detector 55 with the new reference φ* to produce the deviation Δφ. APR 59 calculates the real component Re{E_{C}} on the basis of the deviation Δφ. The output of APR 59 is directly given to the coordinate transformer 63.

Further, in the embodiments described above, the output |Ė_{C}| of the coordinate transformer 63 is detected as a signal representative of the modulation factor M at present. Although, as already described, |Ė_{C}| directly represents the modulation factor, other variables can be also utilized as the signal indicative of the modulation factor. One of them is the gate pulses given to the switching elements of the converter. As apparent from the modulation operation in the gate pulse generator 65, the width of the gate pulses has the close relation to the modulation factor. Therefore, the power factor controller 71 can operate in the same manner as in the embodiments described above, by detecting the on or off duration of the gate pulses and comparing it with a limit value, i.e., a maximum on duration or a minimum off duration, provided in advance.

Furthermore, since the switching elements are controlled by the gate pulses as described above, the on or off time of the switching elements entirely corresponds to the on or off duration of the gate pulses. Therefore, it will be understood that the on or off time of the switching elements can be also utilized as the signal related to the modulation factor. Such on or off time of the switching elements is detected from the converter input voltage Ė_{C}.

In this way, whether or not the modulation factor at that time exceeds its maximum value can be detected by not only |Ė_{C}|, but also other modulation factor related variables.

Returning next to Fig. 4, the description will be made of the function and operation of the limiter 47 provided in the AVR control system.

If the AVR system continues to increase the imaginary component Im{Ė_{C}} with the increase of the DC voltage deviation ΔE_{d}, the amplitude of the AC current İ_{S} becomes very large. As shown in Fig. 3, however, the AC current İ_{S} includes the ripple, and therefore, if the amplitude thereof becomes too large, the peak value I_{SP} of the rippled AC current İ_{S} may exceed the allowable current of GTOs.

Then, when the reference |İ_{S0}|* increases as the DC voltage deviation ΔE_{d} to reach a predetermined limit value I_{SL}, the limiter 47 limits the reference |İ_{S0}|* to the limit value I_{SL} to prevent the imaginary component Im{Ė_{C}} from becoming too large. The limit value I_{SL} is set at such a value that the peak value I_{SP} never exceeds the allowable current of GTOs.

According to this, the AC current İ_{S} can increase up to the limit value I_{SL} without the unnecessarily large margin of the current capacity of GTOs, which is always necessary for GTOs of converters controlled by the conventional control apparatus. Namely, the utilization factor of the current capacity of GTO can be much improved by this embodiment. Inversely, if GTOs of the same current capacity are used for a converter, the larger power can be supplied for a load by controlling the converter by the control apparatus of this embodiment.

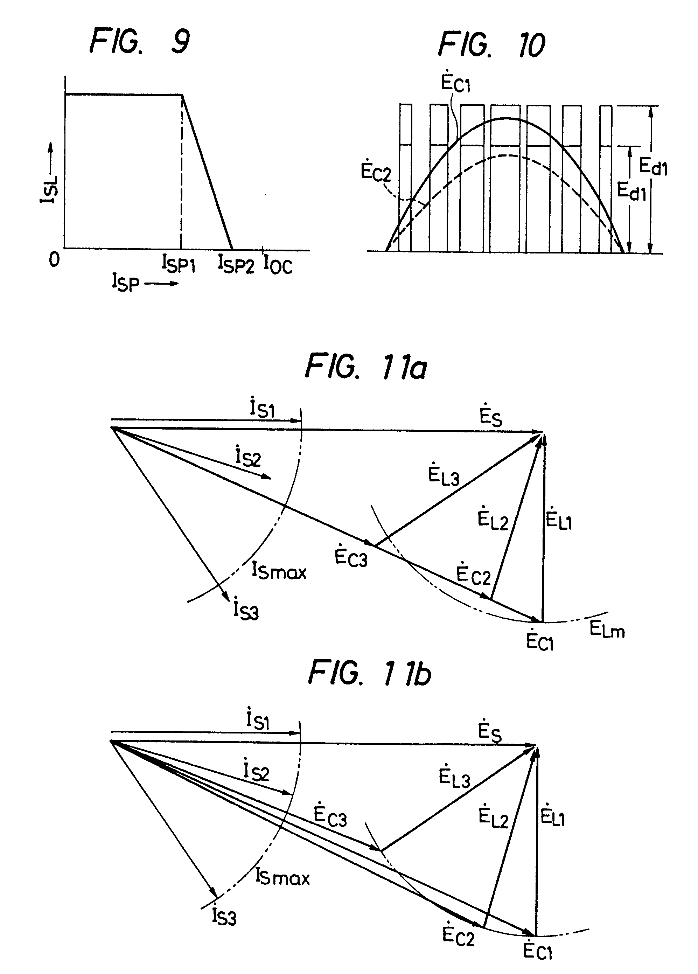

Fig. 8 shows another embodiment by which the utilization factor of the current capacity of GTOs is further improved. The figure, however, shows only the portion directly related to this embodiment, and the same reference numerals and symbols therein indicate the identical parts and signals to those in Fig. 4.

In this embodiment, there is further provided a peak value detector 75, which detects an actual peak value I_{SP} of the rippled AC current İ_{S}. The detected peak value I_{SP} is led to a limit value controller 77, which produces the limit value I_{SL} in response to the detected peak value I_{SP}.

The limit value controller 77 has a characteristic as shown in Fig. 9, for example. Namely, until the peak value I_{SP} reaches a first predetermined value I_{SP1}, the limit value I_{SL} is maintained constant. When the peak value I_{SP} exceeds I_{SP1}, the limit value I_{SL} begins to decrease, and becomes zero when the peak value I_{SP} reaches I_{SP2}. In other words, if the peak value I_{SP} exceeds I_{SP1} to further increases, the limit value I_{SL} is gradually reduced, and when the reference |İ_{S0}|* reaches the limit value I_{SL} at that time, the limiter 47 becomes effective. Accordingly, the peak value I_{SP} is limited within I_{SP2}. Further, I_{SP2} is selected at the value smaller than a set value I_{OC} of an overcurrent relay which operates when the overcurrent flows through the main circuit.

The magnitude of the ripple included in the AC current İ_{S} depends on the operational condition of the converter. Therefore, according to the embodiment of Fig. 8, in which the limit value I_{SL} is changed on the basis of the actually detected peak value I_{SP}, the AC current İ_{S} can increase further close to the limit value I_{SL}, whereby the utilization factor of the current capacity of GTOs can be further improved.

In this way, by providing a limit value of the imaginary component Im{Ė_{C}}, the utilization factor of the current capacity of GTOs is much improved, whereby the size of a converter is reduced and the weight thereof becomes light. This effect can be further enhanced by varying the limit value in response to the peak value I_{SP} of the rippled AC current İ_{S}.

In the following, ACR 53 will be explained. Before that, however, let us consider the problem caused by the fact that a converter operates at the power factor smaller than 1.0, i.e., $\text{cos φ < 1.0}$ .

It is assumed here that a converter operates under the condition of the voltage vectors as shown by the thick solid lines Ė_{S}, Ė_{C2} and Ė_{L2} in Fig. 5. Therefore, the AC current İ_{S2} has the phase difference φ₂ with respect to the source voltage Ė_{S}. In this case, the following relation is established between the reactor voltage Ė_{L2} and the imaginary component Im{Ė_{C2}} of the converter input voltage: 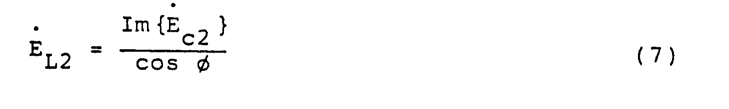
As apparent from the above formula, since cos φ is always smaller than 1.0, the reactor voltage Ė_{L2} is always kept larger than the imaginary component Im{Ė_{C2}} of the converter input voltage.

Further, the AC current İ_{S2} is represented as follows: 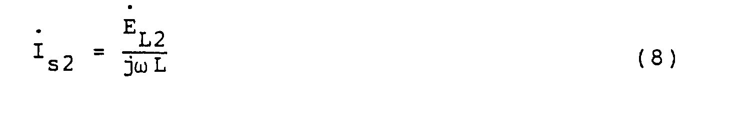
Therefore, 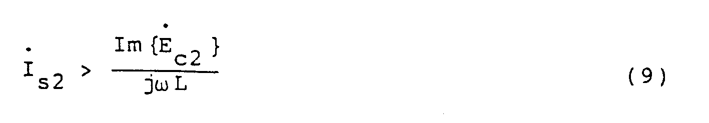
It will be understood from the above description that the AC current İ_{S2} can not be limited at all under the condition that the power factor is smaller than 1.0, i.e., $\text{cos φ < 1.0}$ , even if the imaginary component Im{Ė_{C2}} is subjected to the limit.

Then, in the embodiment of Fig. 4, there is provided a control system consisting of the current detector 49, the comparator 51 and ACR 53. Since this control system is included within the major AVR system, it is called a minor ACR system.

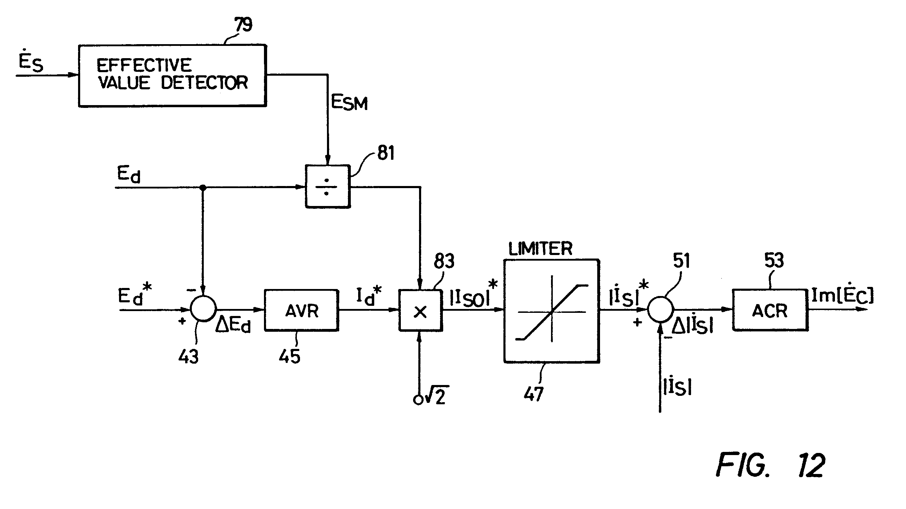

Referring next to Figs. 10, 11a and 11b, the function and operation of the minor ACR system will be explained. If the output power of a converter is increased while the power factor being allowed to deteriorate, the AC current İ_{S} finally reaches the allowable current of the converter. At this time, if a load consumes the power which is larger than the maximum output power of the converter, the capacitor 21 connected on the output side of the converter discharges and the DC voltage E_{d} gradully decreases.

By the way, the relation between a converter input voltage Ė_{C} and a DC voltage E_{d} is reciprocal; therefore, it can be seen that a sinusoidal converter input voltage Ė_{C} is converted to a DC voltage E_{d} by means of the PWM control, or, contrarily, it can be considered that the DC voltage E_{d} is inverted into the sinusoidal converter input voltage Ė_{C} by means of the PWM control. Therefore, when the DC voltage E_{d} decreases, the converter input voltage Ė_{C} also decreases, even if the modulation factor is kept at the same value.

As shown in Fig. 10, for example, the converter input voltages Ė_{C1}, Ė_{C2} are generated by slicing the corresponding DC voltages E_{d1}, E_{d2} into pulses, respectively. Therefore, even if the modulation factor does not change, i.e., the respective pulses are all kept at the same width in both cases of E_{d1} and E_{d2}, the converter input voltage is reduced from Ė_{C1} to Ė_{C2}, when the DC voltage decreases from E_{d1} to E_{d2}.

As described above, the converter input voltage Ė_{C} decreases as the DC voltage E_{d}. Then, let us assume that a converter operates under the condition of the source voltage Ė_{S}, the converter input voltage Ė_{C1} and the reactor voltage Ė_{L1}, as shown in Fig. 11a. Further, in this case, it is assumed that the converter produces the maximum output power. If, therefore, a load further consumes the output power, a capacitor connected on the output side of the converter discharges and the DC voltage E_{d} appearing across the capacitor decreases.

If the AC current İ_{S} is not controlled by the ACR system, the converter input voltage decreases as shown by Ė_{C2} in Fig. 11a, when the DC voltage E_{d} decreases. If E_{d} further decreases, the converter input voltage becomes as shown by Ė_{C3} in the same figure. At this time, an absolute value of the reactor voltage Ė_{L3} becomes larger than a value E_{Lm}, that is, one end of the reactor voltage E_{L3} is positioned outside the circumference of a circle with its center at one end of the source voltage E_{S} and with a radius of E_{Lm}.

Further, the value of E_{Lm} is equal to the reactor voltage ${{\text{E}}^{̇}}_{\text{L}} \text{(= ωL·} {{\text{I}}^{̇}}_{\text{Smax}} \text{)}$ when the AC current İ_{S} is its maximum value İ_{Smax}. Accordingly, if the converter input voltage Ė_{C} decreases and therefore the one end of the reactor voltage Ė_{L} is positioned outside the line E_{Lm}, as shown by Ė_{C3} and Ė_{L3} in Fig. 11a, respectively, then the AC current exceeds İ_{Smax}, i.e., resulting in an overcurrent.

According to this embodiment, the limiter 47 limits the reference |İ_{S}|* to its maximum value and the minor ACR system controls the AC current İ_{S} so that the one end of the reactor voltage Ė_{L} follows the line E_{Lm}. Accordingly, the changes of the converter input voltage Ė_{C} and the reactor voltage Ė_{L} becomes as shown in Fig. 11b. As the result of the control by the ACR system, when a load requires such a large power that exceeds the current capacity of the converter, the AC current can be suppressed within the current capacity of the converter even under the condition that the power factor is smaller than 1.0.

The minor ACR system is also effective for a problem caused by the fact that a main transformer has a plural secondary windings and plural converters are coupled to the respective secondary windings as shown in Fig. 1a. Especially, since the size of the main transformer in an electric vehicle must be made as small as possible, it is very difficult to eliminate mutual inductances between the plural secondary windings. As a result, there occurs a problem that an AC current of a certain secondary winding is easily affected by that of another secondary winding so that the AC current of the particular converters can not be controlled exactly. By providing the minor ACR system in the AVR system, the AC currents of the respective converters can be controlled to follow their reference exactly and the influence of the mutual inductance can be eliminated.

Referring next to Fig. 12, the explanation will be given of still another embodiment of the present invention. Fig. 12 shows only the related portion, and the same reference numerals and symbols therein denote the identical parts and signals to those in the foregoing embodiments. In this embodiment, there is provided an effective value detector 79, which detects an effective value E_{SM} of the source voltage Ė_{S}. The detected effective value E_{SM} is led to a divider 81, in which another input E_{d} is divided by E_{SM}. An output of the divider 81 is given to a multiplier 82, in which the reference |İ_{S0}|* is calculated by multipling three input signals, i.e., the output of the divider 81, an output of AVR 45 and a coefficient of √2.

It is to be noted in this embodiment that the output of AVR 45 is not the reference |İ_{S0}|* of the AC current as in the foregoing embodiments, but the reference I_{d}* of the DC current, which is obtained on the basis of the DC voltage deviation ΔE_{d}. Namely, the reference I_{d}* of the DC current is converted to the reference |İ_{S0}|* of the AC current by the operation of the multiplier 82. The thus obtained reference |İ_{S0}|* is led to the limiter 47. The construction and operation thereafter is the same as those in the foregoing embodiments.

In the following, the principle and operation of this embodiment will be explained. A power P_{d}, which is supplied for a DC load by a converter, and a power Pₐ which is supplied for the converter from an AC source, are represented as follows:

${\text{P}}_{\text{d}} {\text{= E}}_{\text{d}} {\text{· I}}_{\text{d}} \text{(10)}$ 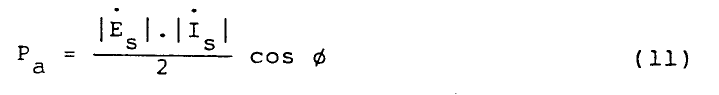
Since both the powers P_{d} and Pₐ should be equal to each other, the absolute value |İ_{S}| of the AC current is represented by the following formula, wherein the power factor is assumed to be 1.0 ( $\text{cos φ = 1.0}$ 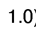 ): 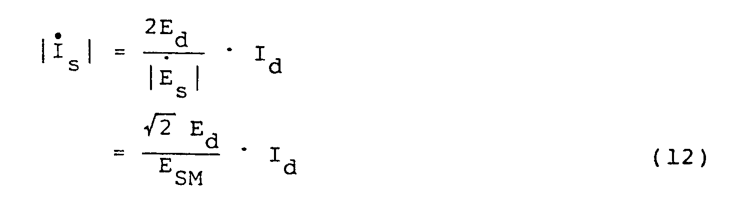
The components added in the embodiment of Fig. 12, i.e., the effective value detector 79, the divider 81 and the multiplier 82, conducts the operation mentioned above. Namely, the reference I_{d}* of the DC current is at first obtained on the basis of the DC voltage deviation ΔE_{d}, and then the reference |İ_{S0}|* of the AC current is calculated on the basis thereof in accordance with the formula (12). As is well known, the DC voltage E_{d} is obtained as the result of the integration of the DC current I_{d} flowing through a capacitor coupled on the output side of the converter. Therefore, the DC voltage E_{d} can be controlled more suitably and accurately by the reference I_{d}* of the DC current, compared with the case of the reference |İ_{S0}|* of the AC current.

Although only several forms of control apparatus embodying the present invention have been herein shown and described, it is understood that various changes and modifications may be made therein within the scope of the appended claims.

## Claims

1. A control apparatus for a PWM power converter (13, 15), which is coupled with an AC power source (9) through a reactive element (17, 19) and has a capacitive element (21) connected on the DC side thereof, the power converter (13, 15) being composed of semiconductor switching elements (27, 29, 31, 33) which are controlled by gate signals generated in accordance with a PWM control, comprising:
a comparator (43) for comparing a detected DC voltage E_{d} with a reference DC voltage E_{d}* for obtaining a deviation value ΔE_{d};
an automatic voltage regulator (45), receiving said deviation value ΔE_{d} and outputting a reference value |İ_{SO}|* of an amplitude of the AC current which is passed through a limiter (47) which supplies an output value |İ_{S}|* which in turn is compared in a further comparator (51) with a detected amplitude |İ_{S}| of the AC current for producing a deviation value Δ|İ_{S}|;
an automatic current regulator (53) which receives said deviation value Δ|İ_{S}| and generates an output signal Im{Ė_{C}} corresponding to the imaginary component of a converter input voltage applied to the power converter (13, 15);
a phase difference detector (55) for detecting a phase difference φ between the voltage of the AC power source (9) and the AC current which is compared in a comparator (57) with a reference value φₒ* for producing a deviation value Δφ;
an automatic phase regulator (59) which receives said deviation value Δφ and generates a signal Re{Ė_{C}}, corresponding to the real component of the input voltage of the power converter (13, 15), which is limited by a limiter (61);
a coordinate transformer (63) which receives said signals Im{Ė_{C}} and Re{Ė_{C}} and transforms them into two values, namely into an absolute value |Ė_{C}| of the power converter (13, 15) input voltage and into the phase value ϑ to be maintained with respect to the source voltage E_{S};
a gate pulse generator (65) to which are applied said signals of |Ė_{C}| and ϑ for modulating a triangular carrier wave supplied by a carrier wave generator (67), on the basis of said applied signals and for generating gate pulses for the semiconductor switching elements (27, 29, 31, 33) of the power converter (13, 15);
**characterized** by
a comparator (69) for comparing said signal |Ė_{C}|, supplied from said coordinate transformer (63), with a maximum modulation factor Mₘₐₓ for obtaining a deviation value ΔM, and
a power factor controller (71), receiving said deviation value ΔM, for generating a power factor limit signal LS_{pf}, which is led to said limiter (61) for limiting said signal Re{Ė_{C}} when it exceeds the limit value of said limit signal LS_{pf}.

2. A control apparatus according to claim 1, wherein the limit value Mₘₐₓ of the modulation factor related value is given in the form of a width of the gate pulse of the switching elements (27, 29, 31, 33), and said comparator (69) detects a width of the gate pulse generated by said gate pulse generator (65) and compares the detected width with the given limit value to produce by said power factor controller (71) said signal LS_{pf} for decreasing the calculated real component of the converter input voltage in accordance with the comparison result, when the detected width exceeds the given limit value.

3. A control apparatus according to claim 1, wherein the limit value Mₘₐₓ of the modulation factor related value is given in the form of an on or off time of the switching elements (27, 29, 31, 33), and said comparator (69) detects the on or off time of the switching elements and compares the detected on or off time with the given limit value to produce by said power factor controller (71) said signal LS_{pf} for decreasing the calculated real component of the converter input voltage in accordance with the comparison result, when the detected on or off time exceeds the given limit value.

4. A control apparatus according to claim 1, wherein there is provided a peak value detector (75) for detecting a peak value of the AC current, and the limit value for the AC current |İ_{S}|* is changed by said AC current limiter (47) in response to the detected peak value of the AC current.

5. A control apparatus according to claim 1, wherein there is provided an effective value detector (79) for detecting an effective value of the source voltage, and the DC current reference is converted into the AC current reference by using the DC voltage and the effective value of the source voltage.

## Patentansprüche

1. Steuerungsapparat für einen PWM-Umrichter (13, 15), der mit einer Wechselstromspeisequelle (9) über eine Selbstinduktivität (17, 19) verbunden ist und der ein kapazitives Element (21) aufweist, das an dessen Gleichstromseite angeschlossen ist, wobei der Umrichter mit Halbleiterschaltelementen (27, 29, 31, 33) aufgebaut ist, die durch Torsignale gesteuert werden, die in Übereinstimmung mit einer PWM-Steuerung gebildet sind, bestehend aus:
einem Vergleicher (43) zum Vergleich einer gemessenen Gleichspannung E_{d} mit einer Bezugsgleichspannung E_{d}* zur Bildung des Wertes einer Abweichung ΔE_{d};
einem automatischen Spannungsregler (45), der den Wert der Abweichung ΔE_{d} aufnimmt und der einen Bezugswert |İ_{S0}|* einer Amplitude des AC-Stroms ausgibt, der durch einen Begrenzer (47) geleitet wird, der einen Ausgangswert |İ_{S}|* liefert, der seinerseits in einem weiteren Vergleicher (51) mit der gemessenen Amplitude |İ_{S}| des AC-Stroms verglichen wird, um einen Wert einer Abweichung Δ|İ_{S}| zu erzeugen;
einem automatischen Stromregler (53), der den Wert der Abweichung Δ|İ_{S}| aufnimmt und der ein Ausgangssignal Im{Ė_{C}} erzeugt, das der imaginären Komponente der Umrichtereingangsspannung entspricht, die an den Umrichter (13, 15) angelegt wird;
einem Phasendifferenzdetektor (55), der eine Phasendifferenz φ zwischen der Spannung der AC-Speisequelle (9) und dem AC-Strom feststellt, die in einem Vergleicher (57) mit einem Bezugswert φ₀* verglichen wird, zur Bildung eines Wertes der Abweichung Δφ;
einem automatischen Phasenregler (59), der den Wert der Abweichung Δφ aufnimmt und der ein Signal Re{Ė_{C}} erzeugt, das der reellen Komponente der Eingangsspannung des Umrichters (13, 15) entspricht und das durch einen Begrenzer (61) begrenzt wird;
einem Koordinatenwandler (62), der die Signale Im{Ė_{C}} und Re{Ė_{C}} empfängt und sie in zwei Werte umwandelt, nämlich in einen Absolutwert |Ė_{C}| der Umrichtereingangsspannung und in den Wert ϑ der Phase, die mit Bezug auf die speisespannung E_{S} einzuhalten ist; und
einem Torimpulsgenerator (65), an den die Signale |Ė_{C}| und ϑ angelegt werden, zur Modulation einer dreiecksförmigen Trägerwelle, die vom Trägerwellengenerator (67) geliefert wird, auf der Basis der angelegten Signale und zur Erzeugung von Torimpulsen für die Halbleiterschaltelemente (27, 29, 31, 33) des Umrichters (13, 15);
**gekennzeichnet durch**
einen Vergleicher (69) zum Vergleich des vom Koordinatenwandler (63) gelieferten Signals |Ė_{C}| mit einem maximalen Modulationsfaktor Mₘₐₓ zur Bildung eines Wertes der Abweichung ΔM; und
einen Wirkungsgradregler (71), der den Wert ΔM empfängt zur Erzeugung des Wirkungsgradbegrenzungssignals LS_{pf}, das zum Begrenzer (61) geleitet wird, zur Begrenzung des Signals Re{Ė_{C}}, wenn dieses den Grenzwert des Begrenzungssignals LS_{pf} überschreitet.

2. Steuerungsapparat nach Anspruch 1, bei dem der Grenzwert Mₘₐₓ des auf den Modulationsfaktor bezogenen Wertes in der Form der Impulsbreite der Torimpulse der Schaltelemente (27, 29, 31, 33) gegeben ist und bei dem der Vergleicher (69) die Breite der Torimpulse feststellt, die vom Torimpulsgenerator (65) erzeugt sind, und die festgestellte Breite mit dem vorgegebenen Grenzwert vergleicht, um durch den Wirkungsgradregler (71) das Signal LS_{pf} zu erzeugen, zur Verringerung der reellen Komponente der Umrichter-Eingangsspannung in Übereinstimmung mit dem Ergebnis des Vergleichs, wenn die festgestellte Breite den vorgegebenen Grenzwert überschreitet.

3. Steuerungsapparat nach Anspruch 1, bei dem der Grenzwert Mₘₐₓ des auf den Modulationsfaktor bezogenen Wertes in der Form der Ein- oder Aus-Zeit der Schaltelemente (27, 29, 31, 33) gegeben ist und bei dem der Vergleicher (69) die Ein- oder Aus-Zeit der Schaltelemente ermittelt und die ermittelte Ein- oder Aus-Zeit mit dem vorgegebenen Grenzwert vergleicht, um durch den Wirkungsgradregler (71) das Signal LS_{pf} zu erzeugen, zur Verringerung der berechneten reellen Komponente der Eingangsspannung in Übereinstimmung mit dem Vergleichsergebnis, wenn die ermittelte Ein- oder Aus-Zeit den vorgegebenen Grenzwert überschreitet.

4. Steuerungsapparat nach Anspruch 1, bei dem ein Spitzenwertdetektor (75) vorgesehen ist, zur Messung des Scheitelwerts des AC-Stroms und der Grenzwert des AC-Stroms |İ_{S}|* durch den AC-Strombegrenzer (47) in Übereinstimmung mit dem gemessenen Scheitelwert des AC-Stroms geändert wird.

5. Steuerungsapparat nach Anspruch 1, bei dem ein Effektivwertdetektor (79) vorgesehen ist, zur Messung des Effektivwerts der Speisespannung und bei dem der Gleichstrombezugswert in den AC-Strombezugswert umgewandelt wird, unter Anwendung des Wertes der Gleichspannung und des Effektivwertes der Speisespannung.

## Revendications

1. Dispositif de commande pour un convertisseur de puissance MID (13,15), qui est couplé à une source d'énergie à courant alternatif (9) par l'intermédiaire d'un élément réactif (17,19) et au côté à courant continu duquel est raccordé un élément capacitif (21), le convertisseur de puissance (13,15) étant constitué par des éléments de commutation à semiconducteurs (27,29,31,33), qui sont commandés par des signaux de commande produits en fonction d'une commande MID, comprenant :
un comparateur (43) pour comparer une tension continue détectée E_{d} à une tension continue de référence E_{d}* pour obtenir une valeur d'écart ΔE_{d};
un régulateur de tension automatique (45), qui reçoit ladite valeur d'écart ΔE_{d} et délivre une valeur de référence |İ_{SO}|* d'une amplitude du courant alternatif, qui est transmis par un limiteur (47) qui délivre une valeur de sortie |İ_{S}|*, qui à son tour est comparée, dans un autre comparateur (51), à une amplitude détectée |İ_{S}| du courant alternatif pour produire une valeur d'écart Δ|İ_{S}| ;
un régulateur automatique de courant (53) qui reçoit ladite valeur d'écart Δ|İ_{S}| et produit un signal de sortie Im{Ė_{C}} qui correspond à la composante imaginaire d'une tension d'entrée du convertisseur appliquée au convertisseur de puissance (13,15);
un détecteur de différence de phase (55) pour détecter une différence de phase entre la tension de la source d'énergie à courant alternatif (9) et le courant alternatif, qui est comparée, dans un comparateur (57), à une valeur de référence φₒ* pour produire une valeur d'écart Δφ;
un régulateur automatique de phase (59) qui reçoit ladite valeur d'écart Δφ et produit un signal Re{Ė_{C}}, qui correspond à la composante réelle de la tension d'entrée du convertisseur de puissance (13,15), qui est limitée par un limiteur (61);
un transformateur de coordonnées (63) qui reçoit lesdits signaux Im{Ė_{C}} et Re{Ė_{C}} et les convertit en deux valeurs, à savoir en une valeur absolue |Ė_{C}| de la tension d'entrée du convertisseur de puissance (13,15) et en la valeur de phase ϑ devant être maintenue par rapport à la source de tension E_{S};
un générateur d'impulsions de commande (65), auquel sont appliqués lesdits signaux |Ė_{C}| et ϑ pour moduler une onde porteuse triangulaire délivrée par un générateur d'onde porteuse (67), sur la base desdits signaux appliqués, et pour produire des impulsions de commande pour les éléments de commutation à semiconducteurs (27,29,31,33) du convertisseur de puissance (13,15);
caractérisé par
un comparateur (69) pour comparer ledit signal |Ė_{C}|, délivré par ledit transformateur de coordonnées (63), à un facteur de modulation maximum Mₘₐₓ pour l'obtention d'une valeur d'écart ΔM; et
un dispositif (71) de commande du facteur de puissance, qui reçoit ladite valeur d'écart ΔM, pour produire un signal limite LS_{pf} du facteur de puissance, qui est envoyé audit limiteur (61) pour limiter ledit signal Re{Ė_{C}} lorsqu'il dépasse la valeur limite dudit signal limite LS_{pf}.

2. Dispositif de commande selon la revendication 1, dans lequel la valeur limite Mₘₐₓ de la valeur associée du facteur de modulation est fournie sous la forme d'une durée de l'impulsion de commande des éléments de commutation (27,29,31,33) et ledit comparateur (69) détecte une durée de l'impulsion de commande produite par ledit générateur d'impulsions de commande (65) et compare la durée détectée à la valeur limite donnée pour produire, par ledit dispositif (71) de commande du facteur de puissance, ledit signal LS_{pf} pour réduire la composante réelle calculée de la tension d'entrée du convertisseur en fonction du résultat de la comparaison, lorsque la durée détectée dépasse la valeur limite donnée.

3. Dispositif de commande selon la revendication 1, dans lequel la valeur limite Mₘₐₓ de la valeur associée du facteur de modulation est donnée sous la forme d'une durée de fermeture ou d'ouverture des éléments de commutation (27,29,31,33), et ledit comparateur (69) détecte la durée de fermeture ou d'ouverture des éléments de commutation et compare la durée détectée de fermeture ou d'ouverture à la valeur limite donnée pour produire, au moyen dudit dispositif (71) de commande du facteur de puissance, ledit signal LS_{pf} pour réduire la composante réelle calculée de la tension d'entrée du convertisseur en fonction du résultat de la comparaison, lorsque la durée détectée de fermeture ou d'ouverture dépasse la valeur limite donnée.

4. Dispositif de commande selon la revendication 1, dans lequel il est prévu un détecteur de valeurs maximum (75) pour détecter une valeur maximum du courant alternatif, et la valeur limite pour le courant alternatif |İ_{S}|* est modifiée par ledit limiteur (47) du courant alternatif en réponse à la valeur maximale détectée du courant alternatif.

5. Dispositif de commande selon la revendication 1, dans lequel il est prévu un détecteur de valeur efficace (79) pour détecter une valeur efficace de la tension de la source, et la référence de courant continu est convertie en la référence de courant alternatif moyennant l'utilisation de la tension continue et de la valeur efficace de la tension de la source.
